(19) Europäisches Patentamt
European Patent Office
Office européen des brevets

(11) **EP 3 655 799 B1**

(12) **EUROPÄISCHE PATENTSCHRIFT**

(45) Veröffentlichungstag und Bekanntmachung des Hinweises auf die Patenterteilung:
**01.11.2023   Patentblatt 2023/44**

(21) Anmeldenummer: **18733549.2**

(22) Anmeldetag: **15.06.2018**

(51) Internationale Patentklassifikation (IPC):
**G01S 19/45** (2010.01)    **G01S 5/00** (2006.01)
**G08G 1/16** (2006.01)    **G01S 19/40** (2010.01)
**G01S 19/51** (2010.01)

(52) Gemeinsame Patentklassifikation (CPC):
**G01S 19/45; G01S 5/0072; G01S 19/40; G01S 19/51**

(86) Internationale Anmeldenummer:
**PCT/EP2018/066016**

(87) Internationale Veröffentlichungsnummer:
**WO 2019/015897 (24.01.2019 Gazette 2019/04)**

(54) **VERFAHREN ZUM BEREITSTELLEN UND ZUM VERBESSERN EINER POSITIONSWAHRSCHEINLICHKEITSVERTEILUNG FÜR GNSS-EMPFANGSDATEN**

METHOD FOR PROVIDING AND IMPROVING A POSITIONAL PROBABILITY DISTRIBUTION FOR GNSS RECEIVE DATA

PROCÉDÉ POUR PRODUIRE ET AMÉLIORER UNE DISTRIBUTION DE PROBABILITÉS DE POSITION POUR DES DONNÉES REÇUES PAR GNSS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2017   DE 102017212603**

(43) Veröffentlichungstag der Anmeldung:
**27.05.2020   Patentblatt 2020/22**

(73) Patentinhaber: **Robert Bosch GmbH**
**70442 Stuttgart (DE)**

(72) Erfinder:
• **DOLGOV, Maxim**
**71272 Renningen (DE)**
• **FUCHS, Hendrik**
**31141 Hildesheim (DE)**
• **LLATSER MARTI, Ignacio**
**31135 Hildesheim (DE)**
• **WILDSCHUETTE, Florian**
**31139 Hildesheim (DE)**
• **MICHALKE, Thomas**
**71263 Weil Der Stadt (DE)**

(56) Entgegenhaltungen:
WO-A1-2011/128739    DE-A1-102009 041 586
DE-A1-102016 004 370    US-A1- 2010 164 789
US-A1- 2011 054 790    US-A1- 2012 089 319
US-A1- 2013 093 618    US-A1- 2016 018 527

**Beschreibung**

Die Erfindung betrifft ein Verfahren zum Korrigieren einer Positionswahrscheinlichkeitsverteilung sowie ein Verfahren zum Bereitstellen von mindestens einem Korrekturterm.

Stand der Technik

Bei einer Vielzahl an Anwendungen ist eine präzise Positionsbestimmung notwendig. Beispielsweise muss in der Luft- und Raumfahrt und auch bei autonomen Fahrzeugen die Position möglichst genau bestimmbar sein. Allerdings ermöglicht der zivil verfügbare Modus des GNSS (Globales Navigationssatellitensystem) Standards, wie zum Beispiel das globale Positionierungssystem (GPS), eine relativ geringe laterale Genauigkeit von ca. 13m und eine vertikale Genauigkeit von ca. 22m.

In der Luftfahrt werden beispielsweise zwei zueinander versetzte GNSS-Empfänger dazu verwendet die Genauigkeit der Positionsbestimmung zu erhöhen. Hierzu wird jeweils ein GNSS-Empfänger an der Front und ein GNSS-Empfänger am Heck des Flugzeugs angeordnet und anhand des festen und bekannten Abstandes der GNSS-Empfänger zueinander die Genauigkeit der Positionsbestimmung optimiert.

Des Weiteren kann die Genauigkeit der Positionsbestimmung durch ein Differential GPS (DGPS) verbessert werden. Dazu überträgt eine DGPS-Station, deren Position im Vorfeld vermessen wurde, lokal gültige Korrektursignale mit Korrekturtermen. Dadurch können Fehler, die beispielswiese durch einen Uhrendrift der Satelliten oder durch atmosphärische Einflüsse entstehen, kompensiert werden. Die DGPS-Dienste sind jedoch in der Regel kostenpflichtig und setzen eine für diesen Zweck vorgesehene Empfangsvorrichtung voraus. Ein derartiges Verfahren zum Verbessern der Genauigkeit der Positionsbestimmung ist aus US 2010/0164789 A1 bekannt. Es werden Positionsdaten von Fahrzeugen mit Hilfe einer Basisstation als Referenz optimiert. Basierend auf einer bekannten und präzise ermittelten GPS-Position der Basisstation und der Entfernung eines Fahrzeugs zur Basisstation können die Positionsdaten des Fahrzeugs bestimmt oder präzisiert werden. Weiterer Stand der Technik ist aus US 2016/0018527 A1, US 2013/0093618 A1, DE 10 2016 004370 A1 und DE 10 2009 041586 A1 bekannt.

Offenbarung der Erfindung

Die der Erfindung zugrunde liegende Aufgabe kann darin gesehen werden, eine Genauigkeit von Positionsmessungen ohne zusätzliche Hardware zu verbessern und diese Verbesserung bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Erfindungsgemäß wird ein Verfahren zum Korrigieren einer Positionswahrscheinlichkeitsverteilung bereitgestellt. In einem ersten Schritt werden durch mindestens zwei mobile Systeme mit jeweils einem GNSS-Empfänger Positionswahrscheinlichkeitsverteilungen für die mindestens zwei mobilen Systeme ermittelt. In einem weiteren Schritt wird ein Abstand der mindestens zwei mobilen Systeme zueinander ermittelt. Durch eine Kommunikationsverbindung werden durch die mindestens zwei mobilen Systeme die ermittelten Positionswahrscheinlichkeitsverteilungen untereinander ausgetauscht. Anschließend wird unter Verwendung der mindestens zwei ermittelten Positionswahrscheinlichkeitsverteilungen und des Abstandes zwischen den mindestens zwei mobilen Systemen eine Verbesserung der Positionswahrscheinlichkeitsverteilungen der mindestens zwei mobilen Systeme vorgenommen.

Durch Ermitteln eines festen oder eines sich veränderlichen Abstandes zwischen einem beweglichen Objekt, wie beispielsweise einem Fahrzeug, und einem anderen beweglichen oder stationären Objekt kann der Abstand als eine genauere Bezugsgröße zum Vergleichen bzw. Anpassen einer Positionswahrscheinlichkeitsverteilungen verwendet werden. Hierdurch kann eine GNSS basierte Lokalisierung durch Austausch von beispielsweise Fahrzeug-zu-Fahrzeug-Daten verbessert werden. Insbesondere können verschiedene von einem Fahrzeug oder mehreren Fahrzeugen ermittelten Daten, wie beispielsweise Entfernungen zu anderen Verkehrsteilnehmern, Entfernung mehrerer Fahrzeuge zu einem Objekt mit einer unbekannten Position oder zu öffentlichen Objekten mit einer bekannten Position, zum Optimieren der Positionsermittlung des Fahrzeuges bzw. des mobilen Systems verwendet werden. Hierbei können die bereits im mobilen System vorhandenen Sensoren und GNSS-Empfänger zum Lokalisieren und zum Verbessern der Positionsbestimmung verwendet werden. Zusätzliche Hardware, beispielsweise zum Anwenden des DGPS, wird somit nicht benötigt.

Zum Durchführen des Verfahrens weist jedes Fahrzeug eine lokale Schätzung seiner Position in Form einer Wahrscheinlichkeitsverteilung auf. Die Position in Form einer Wahrscheinlichkeitsverteilung ist die Positionswahrscheinlichkeitsverteilung, die auf Basis bisheriger von dem mobilen System durchgeführter GNSS-Messungen ermittelt wurde. Zum Ermitteln der Positionswahrscheinlichkeitsverteilung können auch andere Sensoren des mobilen Systems, wie beispielsweise Entfernungssensoren oder Beschleunigungssensoren, unterstützend verwendet werden. Sobald eine Kommunikationsverbindung zwischen mehreren mobilen Systemen aufgebaut werden konnte, tauschen die mobilen Systeme ihre Positionsschätzungen mit den geschätzten Uhrendrifts zu den beobachteten Satelliten sowie die gemessenen GNSS-Signale aus. Die GNSS-Signale bzw. Messungen können beispielsweise die dreidimensionalen Positionen, Zeitpunkt, zu dem das Signal versendet wurde, sowie die lokale Empfangszeit des mobilen Systems aufweisen. Die von jedem mobilen System ermittelten Sensordaten können ebenfalls über die Kommunikationsverbindung übertragen werden. Beispielsweise können die mobilen Systeme jeweils einen Abstand zueinander ermitteln und anschließend untereinander austauschen. Hierdurch können individuelle Messunsicherheiten eines Sensors ausgeglichen werden. Der Abstand zwischen den mobilen Systemen kann auch von einem ersten mobilen System ermittelt und an das andere bzw. zweite mobile System übertragen werden. Die ausgetauschten bzw. übertragenen Daten können anschließend gemeinsam mit den ermittelten Positionswahrscheinlichkeitsverteilungen von jedem mobilen System dazu verwendet werden einen Korrekturterm zum Korrigieren bzw. Optimieren von Positionswahrscheinlichkeitsverteilungen zu berechnen. In einem weiteren Schritt kann der ermittelte Korrekturterm auf die nachfolgenden Berechnungen bzw. Messungen der Position eines mobilen Systems angewandt werden.

Die Verbesserung der GPS-Position kann neue Fahrfunktionen ermöglichen, die beispielsweise eine spurgenaue Lokalisierung benötigen. Des Weiteren können durch das Verfahren klassische Navigationssysteme in ihrer Genauigkeit verbessert werden.

Gemäß einem Ausführungsbeispiel des Verfahrens wird die Positionswahrscheinlichkeitsverteilung durch GNSS-Empfänger eines Fahrzeuges oder eines tragbaren Gerätes ermittelt. Die mobilen Systeme können beispielsweise Fahrzeuge, tragbare Geräte oder stationär angeordnete Geräte sein. Beispielsweise können auch tragbare Geräte stationär angeordnet werden. Des Weiteren können auch tragbare Geräte in einem Fahrzeug angeordnet werden und zum Durchführen des Verfahrens genutzt werden. Als tragbare Geräte können beispielsweise Navigationsgeräte, Mobilfunkgeräte, Computer, Tablets und dergleichen verwendet werden.

Nach einer weiteren vorteilhaften Ausführungsform des Verfahrens wird die durch den Positionsschätzer ermittelte Positionswahrscheinlichkeitsverteilung durch mindestens einen Sensor verbessert Jedes mobile System kann seine bereits vorhandenen Sensoren dazu verwenden, seine äußere Umgebung wahrzunehmen. Die derart ermittelten Sensordaten können zum Verbessern der Positionswahrscheinlichkeitsverteilung verwendet werden. Falls beispielsweise ein kommunizierendes mobiles System das andere bzw. zweite mobile System über seine Sensorik, wie beispielsweise ein Radar oder eine Kamera wahrnimmt, kann es die relative Position des GNSS-Empfängers des zweiten mobilen Systems zu dem eigenen GNSS-Empfänger präzise bestimmen und diesen Abstand sowie die empfangenen GNSS Messungen mindestens eines anderen mobilen Systems und eigene GNSS Messungen zur Schätzung des GNSS-Korrekturterms verwenden. Der so ermittelte Korrekturterm kann mit allen mobilen Systemen in Reichweite geteilt werden. Das ist möglich, da angenommen werden kann, dass sich die GNSS-Fehler im nahen Umfeld der mobilen Systeme kaum ändern.

Gemäß einem weiteren Ausführungsbeispiel des Verfahrens ermitteln die mindestens zwei mobilen Systeme durch mindestens einen Sensor einen Abstand zueinander oder schätzen den Abstand zueinander ab. Beispielsweise kann der Abstand eines mobilen Systems zum zweiten mobilen System durch Radarsensoren, LIDAR (engl. light detection and ranging) Sensoren, Ultraschallsensoren und dergleichen ermittelt werden. Hierbei kann der Abstand zwischen den mindestens zwei mobilen Systemen sich während der Messung verändern oder gleich bleiben.

Nach einem weiteren Ausführungsbeispiel des Verfahrens werden lokal ermittelte Positionsdaten durch die Kommunikationsverbindung der mindestens zwei mobilen Systeme ausgetauscht und zum Berechnen des Korrekturterms verwendet. Beispielsweise kann jedes mobile System innerhalb der Kommunikationsverbindung durch eigene Sensoren einen Abstand zu einem anderen mobilen System oder einem definierten Objekt in seinem Umfeld messen oder abschätzen. Durch diese Sensordaten kann das mobile System seine eigene Positionswahrscheinlichkeitsverteilung anhand eines berechneten Korrekturterms verbessern. Die ermittelten Sensordaten oder der Korrekturterm können anderen mobilen Systemen in einem definierten Umkreis bereitgestellt werden.

Gemäß einer weiteren vorteilhaften Ausführungsform des Verfahrens ist die Kommunikationsverbindung eine Funkverbindung. Insbesondere kann die Kommunikationsverbindung eine Mobilfunkverbindung, eine drahtlose Fahrzeug-zu-Fahrzeug Verbindung und dergleichen sein. Beispielsweise können als Übertragungsstandard UMTS, LTE, WLAN, Bluetooth und dergleichen verwendet werden.

Nach einer weiteren Ausführungsform des Verfahrens wird zum Ermitteln der Positionswahrscheinlichkeitsverteilung und des Abstandes durch die mindestens zwei Fahrzeuge ein Abstand zueinander eingestellt. Alternativ oder zusätzlich zum Messen eines Abstandes zwischen den mindestens zwei mobilen Systemen kann auch ein definierter Abstand zwischen den mobilen Systemen, beispielsweise durch einen Abstandshalteassistenten, eingestellt werden. Beispielsweise können miteinander kommunizierende Fahrzeuge ihren relativen Abstand und ihre Geschwindigkeit automatisiert anpassen, sodass die Berechnung der lokalen Korrekturterme optimiert werden kann. Bei der Berechnung der Korrekturterme können somit feste Abstandswerte angenommen werden. Hierdurch können beispielsweise kooperative Funktionen von Fahrzeugen verbessert werden. Kooperative Funktionen sind darauf ausgelegt automatisiert, potentiell kritische gemeinsame Fahrmanöver mehrerer Fahrzeuge, wie beispielsweise automatisches Einfädeln auf eine Autobahn oder automatische Lückenvergrößerung durch den Verkehr auf einer Hauptfahrbahn, auszuführen.

Nach einem weiteren Aspekt der Erfindung wird ein Verfahren zum Bereitstellen von mindestens einem Korrekturterm offenbart. Der Korrekturterm wurde hierbei durch das Verfahren gemäß dem vorherigen Aspekt der Erfindung berechnet. In einem ersten Schritt wird mindestens ein Korrekturterm an eine zentrale Servereinheit übermittelt. Der übermittelte Korrekturterm wird anschließend einem Ort zugeordnet oder an dem entsprechenden Ort aktualisiert. Abhängig von einer Position eines mobilen Systems wird ein dem Ort bzw. der Position des mobilen Systems entsprechender Korrekturterm von der zentralen Servereinheit an das mobile System übertragen.

Es können die durch eine Vielzahl an mobilen Systemen ermittelten Korrekturterme in Echtzeit oder in bestimmten zeitlichen Abständen an eine zentrale Servereinheit übertragen werden. Zusätzlich zu den übermittelten Korrekturtermen können auch die Positionen der jeweiligen mobilen Systeme an die Servereinheit übertragen werden. Anhand dieser Daten kann eine Karte erstellt werden, die positionsabhängig Korrekturterme für beliebige oder bestimmte mobile Systeme bereitstellen kann. Dies kann insbesondere durch die Verknüpfung der Korrekturterme an die entsprechenden Positionen realisiert werden. Beispielsweise kann das Verfahren zum Bereitstellen eines Dienstes zum Verteilen der Korrekturwerte über einen zentralen Server an andere Verkehrsteilnehmer verwendet werden. Die Korrekturterme und die jeweiligen Positionen bzw. Positionswahrscheinlichkeitsverteilungen können beispielsweise über ein Mobilfunknetz oder das Internet an die zentrale Servereinheit übermittelt werden. Ein Bereitstellen der Korrekturterme an andere Teilnehmer bzw. mobile Systeme kann ebenfalls in Form einer drahtlosen Datenübertragung über ein zellulares Netzwerk oder über ein kabelgebundenes Kommunikationsnetzwerk erfolgen. Im Vergleich zum DGPS-Diensten können durch das Verfahren lokale Hindernisse und Abschattung, wie beispielsweise durch Gebäude, reduziert oder vorzugsweise vermieden werden. Die in der zentralen Servereinheit abgelegten Korrekturterme können auf Anfrage von mobilen Systemen an die anfragenden mobilen Systeme übermittelt werden. Insbesondere können die Korrekturterme abhängig von einer Position des mobilen Systems bereitgestellt werden. Im Vergleich zu klassischen DGPS-Systemen ist keine dedizierte Empfangsvorrichtung in Fahrzeugen oder mobilen Systemen notwendig, weshalb die GNSS-Empfangshardware in Fahrzeugen günstig gehalten werden kann, sowie der Betrieb von ortsfesten DGPS-Basisstationen entfallen kann.

Nach einem vorteilhaften Ausführungsbeispiel des Verfahrens wird anhand des mindestens eines übermittelten Korrekturterms für einen ersten Ort mindestens ein Korrekturterm für mindestens einen zweiten Ort geschätzt. Die begrenzte Anzahl an lokal gültigen bzw. lediglich in einem Positionspunkt gültigen Korrekturtermen kann auch auf andere Bereiche einer Karte interpoliert werden. Sobald eine Schätzung oder Berechnung der GNSS-Korrekturterme erfolgt ist, kann diese an den zentralen Server übertragen werden. Die zentrale Servereinheit sammelt die Korrekturterme von verschiedenen mobilen Systemen und benutzt diese, um eine örtliche Verteilung der GNSS-Korrekturterme zu bilden. Hierzu sind diverse Ansätze möglich. Beispielsweise kann ein Gaußprozess verwendet werden. Ein mit den ermittelten Daten trainierter Gaußprozess kann dazu verwendet werden GNSS-Korrekturterme für Positionen abzuschätzen, für die keine Korrekturterme übertragen wurden. Der große Vorteil bei der Verwendung eines Gaußprozesses besteht darin, dass der von ihm gelieferte Wert für den GNSS-Korrekturterm eine Gaußverteilung ist, die neben dem Mittelwert auch eine Kovarianz, also eine Quantifizierungszahl für die Qualität des interpolierten GNSS-Korrekturterms, liefert. Hierbei kann auch die zeitliche Veränderung der Korrekturterme berücksichtigt werden. Dies kann beispielsweise dadurch abgebildet werden, dass die Kovarianz der empfangenen Korrekturterme mit der Zeit vergrößert wird, wodurch ihnen weniger Gewicht beim Trainieren des Gaußprozesses zugesprochen werden kann. Alternativ zur Verwendung eines Gaußprozesses kann das betrachtete Problem der Schätzung der örtlichen Verteilung von GNSS-Korrekturterme als ein verteilt-parametrisches Phänomen aufgefasst werden, dessen Parameter mittels einer Bayesscher Schätzung ermittelt werden können.

Gemäß einer weiteren Ausführungsform des Verfahrens wird der mindestens ein berechneter Korrekturterm von mindestens einem Fahrzeug an die Servereinheit übermittelt. Die mobilen Systeme, die die Korrekturterme sowie die jeweiligen Positionen der Korrekturterme an die zentrale Servereinheit übermitteln, können vorzugsweise Fahrzeuge sein. Die Fahrzeuge können beispielsweise eine drahtlose Internetverbindung zur zentralen Servereinheit aufweisen und über diese die Korrekturterme senden und empfangen.

Im Folgenden werden anhand von stark vereinfachten schematischen Darstellungen bevorzugte Ausführungsbeispiele der Erfindung näher erläutert.

Hierbei zeigen

Fig. 1 einen schematischen Ablauf eines Verfahrens zum Bereitstellen von mindestens einem Korrekturterm gemäß einem ersten Ausführungsbeispiel,

Fig. 2 einen schematischen Ablauf eines Verfahrens zum Korrigieren einer Positionswahrscheinlichkeit gemäß einem ersten Ausführungsbeispiel und

Fig. 3 ein nicht erfindungsgemäßes Beispiel für einen Ablauf eines Verfahrens zum Korrigieren einer Positionswahrscheinlichkeitsverteilung.

In den Figuren weisen dieselben konstruktiven Elemente jeweils dieselben Bezugsziffern auf.

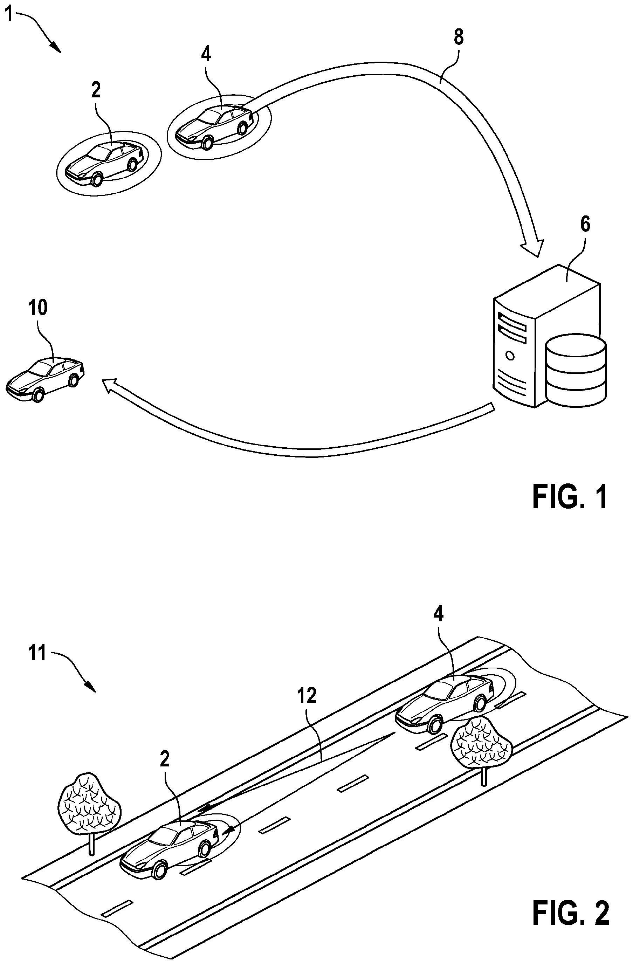

Die Figur 1 zeigt einen schematischen Ablauf eines Verfahrens 1 zum Bereitstellen von mindestens einem Korrekturterm gemäß einem ersten Ausführungsbeispiel. Ein erstes mobiles System 2 bzw. ein erstes Fahrzeug 2 kommuniziert über eine drahtlose Kommunikationsverbindung mit einem zweiten mobilen System 4 bzw. einem zweiten Fahrzeug 4. Beide Fahrzeuge 2, 4 haben per GNSS ihre jeweilige Positionswahrscheinlichkeitsverteilung ermittelt. Das zweite Fahrzeug 4 hat mit Hilfe eines Abstandhalteassistenten einen Abstand 12 zu dem ersten Fahrzeug 2 ermittelt und den Abstand 12 an das erste Fahrzeug 2 übermittelt. Somit können beide Fahrzeuge 2, 4 anhand ihrer Positionswahrscheinlichkeitsverteilungen und des genauer ermittelten Abstandes 12 beider Fahrzeuge 2, 4 zueinander Korrekturen ihrer jeweiligen Positionswahrscheinlichkeitsverteilungen vornehmen.

Gemäß dem Ausführungsbeispiel misst das zweite Fahrzeug 4 die relative Position des ersten Fahrzeuges 2 mittels bordeigener Sensorik. Die Position des ersten Fahrzeugs 2 kann anschließend aus der berechneten Position des zweiten Fahrzeugs 4 sowie der gemessenen relativen Position bestimmt werden. Es wird der Fall betrachtet, dass eine Abweichung der Signalausbreitungsgeschwindigkeit von der nominalen Lichtgeschwindigkeit aufgrund atmosphärischer Einflüsse die einzige Fehlerquelle ist. Diese Annahme ist gerechtfertigt, weil diese Art von Einflüssen in der Regel am bedeutendsten ist. Darüber hinaus lässt sich Mehrwegausbreitung ebenfalls als Variation der Ausbreitungsgeschwindigkeit modellieren. Seien nun $v_1^x, v_1^y, v_1^z$ die unbekannten Koordinaten des zweiten Fahrzeuges 4, $r_2^x, r_2^y, r_2^z$ die gemessene relative Position des ersten Fahrzeugs 2, $s_i^x, s_i^y, s_i^z$ die Koordinaten des Satelliten $i$, $b_1$ und $b_2$ die Drifte der lokalen Fahrzeuguhren, $d_{ij}$ die gemessene Zeitdifferenz zwischen dem Verschicken des GNSS-Signals durch Satellit $j$ und Empfang durch Fahrzeug $i$ und schließlich $e_j$ die Abweichungen der GNSS-Signalübertragungsgeschwindigkeit des Satelliten $j$ von nomineller Lichtgeschwindigkeit $c$. Dann lässt sich folgendes Gleichungssystem aufstellen:

$$\frac{1}{c - e_i} \sqrt{\left(v_1^x - s_i^x\right)^2 + \left(v_1^y - s_i^y\right)^2 + \left(v_1^z - s_i^z\right)^2} + b_1 = d_{1i}$$

$$\frac{1}{c - e_i} \sqrt{\left(v_1^x + r_2^x - s_i^x\right)^2 + \left(v_1^y + r_2^y - s_i^y\right)^2 + \left(v_1^z + r_2^z - s_i^z\right)^2} + b_1 = d_{1i}$$

Dieses Gleichungssystem ist bei zwei über eine Kommunikationsverbindung miteinander kommunizierenden Fahrzeugen für fünf beobachtete Satelliten überbestimmt und kann beispielsweise mittels der Methode der kleinsten Quadrate gelöst werden. Prinzipiell lässt sich folgende Ungleichung herleiten

$$mn \geq m + n + 3\,,$$

wobei $m$ die Anzahl kooperierender Fahrzeuge und $n$ die Anzahl der beobachteten Satelliten ist. Ist diese Ungleichung erfüllt, so ist das oben formulierte Gleichungssystem lösbar. Wenn beispielsweise vier Fahrzeuge über entsprechende Kommunikationsverbindung miteinander kooperieren, können bereits zwei Satelliten ausreichen, um eine GNSS-Positionsbestimmung sowie eine Berechnung der Uhrendrifte aller beteiligten Fahrzeuge und der Korrekturterme zu berechnen. Sollten nicht genügend Satelliten beobachtbar sein, können entweder die Korrekturterme aus der vorherigen Berechnung verwendet werden oder es kann auf die herkömmlichen GNSS-Gleichungen ohne Korrekturterme zurückgegriffen werden. Des Weiteren kann die Verwendung von rekursiven und nichtrekursiven Schätzverfahren die Ergebnisse verbessern.

Die ermittelten Korrekturterme können von den Fahrzeugen 2, 4 zum Optimieren Ihrer Positionsbestimmung verwendet werden und an eine zentrale Servereinheit 6, beispielsweise über eine Internetverbindung 8, übermittelt werden. Auf der zentralen Servereinheit 6 werden den berechneten Korrekturtermen die jeweilige Positionen bzw. Positionswahrscheinlichkeitsverteilung der Fahrzeuge 2, 4 zugeordnet. Anhand eine Vielzahl an Korrekturtermen und der entsprechenden Positionen kann eine Karte zum Korrigieren von Positionswahrscheinlichkeiten erstellt und bereitgestellt werden. Beispielsweise kann abhängig von einer Position eines weiteren Fahrzeuges 10 diesem Fahrzeug 10 ein bereits ermittelter Korrekturwert zum Optimieren seiner Positionsbestimmung zugesendet werden.

In der Figur 2 ist ein schematischer Ablauf eines Verfahrens 11 zum Korrigieren einer Positionswahrscheinlichkeit gemäß einem ersten Ausführungsbeispiel verdeutlicht. Die beiden Fahrzeuge 2, 4 tauschen über eine Kommunikationsverbindung die ermittelten Positionswahrscheinlichkeiten untereinander aus. Das zweite Fahrzeug 4 misst über einen Abstandssensor einen Abstand 12 zwischen dem ersten Fahrzeug 2 und dem zweiten Fahrzeug 4. Der Abstand 12 kann ebenfalls mithilfe der Kommunikationsverbindung an das erste Fahrzeug 2 übertragen werden. Anhand einer genauen Messung des Abstandes 12 können die Fahrzeuge 2, 4 ihre Positionsermittlung verbessern bzw. kalibrieren und die ermittelten Positionswahrscheinlichkeitsverteilungen eingrenzen bzw. optimieren.

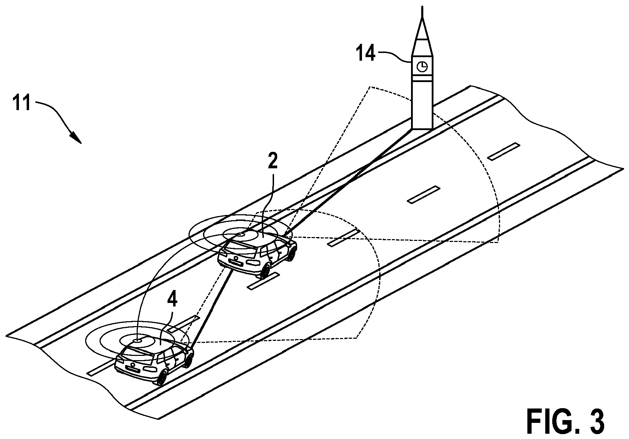

In der Figur 3 ist ein nicht erfindungsgemäßes Beispiel für einen Ablauf eines Verfahrens zum Korrigieren einer Positionswahrscheinlichkeit veranschaulicht.

Insbesondere wird hier eine von dem ersten Fahrzeug 2 erkannte Landmarke 14 erkannt und ein Abstand zwischen dem ersten Fahrzeug 2 und der Landmarke 14 gemessen. Das zweite Fahrzeug 4 kann in diesem Beispiel die Landmarke 14 noch nicht erkennen, da die Distanz des Fahrzeuges 4 zu der Landmarke 14 zu groß Ist. Hierbei kann der Abstand der Landmarke 14 zu dem ersten Fahrzeug 2 die Positionswahrscheinlichkeitsverteilung des ersten Fahrzeuges 2 verbessern. Anhand eines Abstandes des zweiten Fahrzeuges 4 zum ersten Fahrzeug 2 und anschließend der weiteren Entfernung zur Landmarke 14, kann auch das zweite Fahrzeug 4 seine Positionswahrscheinlichkeitsverteilung verbessern. Insbesondere kann das zweite Fahrzeug 4 durch die Kommunikationsverbindung mit dem ersten Fahrzeug 2 die Landmarke 14 indirekt erkennen und somit seine Reichweite erhöhen.

**Patentansprüche**

1.  Verfahren (11) zum Korrigieren einer Positionswahrscheinlichkeitsverteilung, wobei

    - mindestens zwei mobile Systeme (2, 4) durch jeweils einen GNSS-Empfänger jeweils eine Positionswahrscheinlichkeitsverteilung ermitteln,
    - mindestens ein mobiles System (4) einen Abstand (12) zu mindestens einem zweiten mobilen (2) System ermittelt,
    - die mindestens zwei mobilen Systeme (2, 4) durch eine Kommunikationsverbindung die ermittelten Positionswahrscheinlichkeitsverteilungen untereinander austauschen,

    **dadurch gekennzeichnet, dass** unter Verwendung der mindestens zwei ermittelten Positionswahrscheinlichkeitsverteilungen und des Abstandes (12) zwischen den mindestens zwei mobilen Systemen (2, 4) eine Verbesserung der Positionswahrscheinlichkeitsverteilungen der mindestens zwei mobilen Systeme (2, 4) vorgenommen wird.

2.  Verfahren nach Anspruch 1, wobei die Positionswahrscheinlichkeitsverteilung durch GNSS-Empfänger eines Fahrzeuges (2, 4) oder eines tragbaren Gerätes ermittelt wird.

3.  Verfahren nach Anspruch 1 oder 2, wobei die durch den Positionsempfänger ermittelte Positionswahrscheinlichkeitsverteilung durch mindestens einen Sensor verbessert wird.

4.  Verfahren nach einem der Ansprüche 1 bis 3, wobei die mindestens zwei mobilen Systeme (2, 4) durch mindestens einen Sensor einen Abstand (12) zueinander ermitteln oder den Abstand (12) zueinander abschätzen.

5.  Verfahren nach einem der Ansprüche 1 bis 4, wobei die mindestens zwei mobilen Systeme (2, 4) lokal ermittelte Positionsdaten durch die Kommunikationsverbindung austauschen und zum Berechnen des Korrekturterms verwendet werden.

6.  Verfahren nach einem der Ansprüche 1 bis 5, wobei die Kommunikationsverbindung eine Fahrzeug-zu-Fahrzeug Kommunikationsverbindung oder eine Funkverbindung ist.

7.  Verfahren nach einem der Ansprüche 1 bis 6, wobei zum Ermitteln der Positionswahrscheinlichkeitsverteilungen und des Abstandes (12) durch die mindestens zwei Fahrzeuge (2, 4) ein Abstand zueinander eingestellt wird.

8.  Verfahren (1) zum Bereitstellen von mindestens einem Korrekturterm, wobei der Korrekturterm durch das Verfahren (11) zum Korrigieren einer Positionswahrscheinlichkeitsverteilung nach einem der vorherigen Ansprüche berechnet wurde, aufweisend die folgenden Schritte:

    - Übermitteln des mindestens einen Korrekturterms an eine Servereinheit (6),
    - Zuordnen des mindestens einen Korrekturterms einem Ort oder erneuern des mindestens einen Korrekturterms an dem Ort,
    - Übertragen des mindestens einen Korrekturterms an mindestens ein mobiles System (10) abhängig von einer Position des mobilen Systems (10).

**9.** Verfahren nach Anspruch 8, wobei anhand des mindestens einen übermittelten Korrekturterms für einen ersten Ort mindestens ein Korrekturterm für mindestens einen zweiten Ort geschätzt wird.

**10.** Verfahren nach Anspruch 8 oder 9, wobei der mindestens eine berechnete Korrekturterm von mindestens einem Fahrzeug (2, 4) an die zentrale Servereinheit (6) übermittelt wird.

**Claims**

**1.** Method (11) for correcting a position probability distribution, wherein

- at least two mobile systems (2, 4) determine a respective position probability distribution by way of a respective GNSS receiver,
- at least one mobile system (4) determines a distance (12) to at least one second mobile system (2),
- the at least two mobile systems (2, 4) exchange the determined position probability distributions with one another through a communication connection, **characterized in that** an improvement is made to the position probability distributions of the at least two mobile systems (2, 4) using the at least two determined position probability distributions and the distance (12) between the at least two mobile systems (2, 4).

**2.** Method according to Claim 1, wherein the position probability distribution is determined by GNSS receivers of a vehicle (2, 4) or of a portable device.

**3.** Method according to Claim 1 or 2, wherein the position probability distribution determined by the position receiver is improved by at least one sensor.

**4.** Method according to one of Claims 1 to 3, wherein the at least two mobile systems (2, 4) use at least one sensor to determine a distance (12) between one another and/or estimate the distance (12) between one another.

**5.** Method according to one of Claims 1 to 4, wherein the at least two mobile systems (2, 4) exchange locally determined position data through the communication connection and are used to compute the correction term.

**6.** Method according to one of Claims 1 to 5, wherein the communication connection is a vehicle-to-vehicle communication connection or a radio connection.

**7.** Method according to one of Claims 1 to 6, wherein, in order to determine the position probability distributions and the distance (12), the at least two vehicles (2, 4) set a distance between one another.

**8.** Method (1) for providing at least one correction term, wherein the correction term has been computed by the method (11) for correcting a position probability distribution according to one of the preceding claims, having the following steps:

- transmitting the at least one correction term to a server unit (6),
- assigning the at least one correction term to a location or replacing the at least one correction term at the location,
- transmitting the at least one correction term to at least one mobile system (10) depending on a position of the mobile system (10).

**9.** Method according to Claim 8, wherein at least one correction term for at least one second location is estimated on the basis of the at least one transmitted correction term for a first location.

**10.** Method according to Claim 8 or 9, wherein the at least one computed correction term is transmitted by at least one vehicle (2, 4) to the central server unit (6).

**Revendications**

**1.** Procédé (11) de correction d'une distribution de probabilité de position,

- au moins deux systèmes mobiles (2, 4) déterminant chacun une distribution de probabilité de position à l'aide d'un récepteur GNSS,
- au moins un système mobile (4) déterminant une distance (12) à au moins un deuxième système mobile (2),
- les au moins deux systèmes mobiles (2, 4) échangeant entre eux les distributions de probabilité de position déterminées par le biais d'une liaison de communication,

**caractérisé en ce que** l'utilisation des au moins deux distributions de probabilité de position déterminées et de la distance (12) entre les au moins deux systèmes mobiles (2, 4) permet d'améliorer les distributions de probabilité de position des au moins deux systèmes mobiles (2, 4).

2. Procédé selon la revendication 1, la distribution de probabilité de position étant déterminée par des récepteurs GNSS d'un véhicule (2, 4) ou d'un appareil portable.

3. Procédé selon la revendication 1 ou 2, la distribution de probabilité de position déterminée par le récepteur de position étant améliorée par au moins un capteur.

4. Procédé selon l'une des revendications 1 à 3, les au moins deux systèmes mobiles (2, 4) déterminant une distance (12) l'un par rapport à l'autre, ou estimant la distance (12) l'un par rapport à l'autre, par le biais d'au moins un capteur.

5. Procédé selon l'une des revendications 1 à 4, les au moins deux systèmes mobiles (2, 4) échangeant des données de position déterminées localement par le biais de la liaison de communication et étant utilisés pour calculer le terme de correction.

6. Procédé selon l'une des revendications 1 à 5, la liaison de communication étant une liaison de communication de véhicule à véhicule ou une liaison radio.

7. Procédé selon l'une des revendications 1 à 6, les au moins deux véhicules (2, 4) réglant une distance l'un par rapport à l'autre afin de déterminer les distributions de probabilité de position et la distance (12) .

8. Procédé (1) de fourniture d'au moins un terme de correction, le terme de correction ayant été calculé par le procédé (11) de correction d'une distribution de probabilité de position selon l'une des revendications précédentes, ledit procédé comportant les étapes suivantes :

- transmettre l'au moins un terme de correction à une unité serveur (6),
- associer l'au moins un terme de correction à un emplacement ou renouveler l'au moins un terme de correction à l'emplacement,
- transmettre l'au moins un terme de correction à au moins un système mobile (10) en fonction d'une position du système mobile (10).

9. Procédé selon la revendication 8, au moins un terme de correction destiné à au moins un deuxième emplacement étant estimé sur la base de l'au moins un terme de correction transmis destiné à un premier emplacement.

10. Procédé selon la revendication 8 ou 9, l'au moins un terme de correction calculé étant transmis par au moins un véhicule (2, 4) à l'unité serveur centrale (6) .

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100164789 A1
- US 20160018527 A1
- US 20130093618 A1
- DE 102016004370 A1
- DE 102009041586 A1